# EUROPÄISCHE PATENTSCHRIFT

(11) **EP 2 915 421 B1**
(45) Veröffentlichungstag und Bekanntmachung des Hinweises auf die Patenterteilung: **10.05.2017**
(21) Anmeldenummer: 15154972.2
(22) Anmeldetag: 13.02.2015
(51) Int. Cl.: A01D 34/835

(54) **STOPPELKNICKER FÜR EINEN MAISPFLÜCKER**
STUBBLE BENDER FOR A MAIZE PICKER
PLIEUR DE CHAUME POUR CUEILLEUR DE MAÏS

(30) Priorität: 04.03.2014 US 201414196386
(43) Veröffentlichungstag der Anmeldung: 09.09.2015
(73) Patentinhaber: Deere & Company, Moline, IL 61265 (US)
(72) Erfinder: Vandeven, Michael L, Princeton, IA Iowa 52768 (US); Heim, Daniel M, Port Byron, IL Illinois 61275 (US); Bomleny, Duane M, Geneseo, IL Illinois 61254 (US); Keller, Benjamin M, Reynolds, IL Illinois 61279 (US)
(74) Vertreter: Holst, Sönke

(56) Entgegenhaltungen:
- EP-A1- 2 520 151
- US-A1- 2013 019 581
- US-A1- 2013 020 101
- US-A1- 2013 061 569

## Beschreibung

Die Erfindung bezieht sich auf Maispflücker und insbesondere auf einen Stoppelknicker für einen Maispflücker.

### Hintergrund

Mähdrescher ernten Mais mittels Maispflückern. Die Maispflücker sind an der Vorderseite des Mähdreschers befestigt und erstrecken sich in seitlicher Richtung quer zur Vorwärtsfahrtrichtung. Der Rahmen des Mähdreschers erstreckt sich ebenfalls seitlich und umfasst mehrere Reiheneinheiten. Jede Reiheneinheit ist konfiguriert, eine Reihe von Maispflanzen zu ernten.

Wenn der Maispflücker den Maiskolben von der Pflanze trennt, lässt er den unteren Teil der Maisstängel (d.h. Maisstoppeln) aufwärts aus dem Boden ragend. Die Räder des Mähdreschers rollen in der Regel genau über eine Reihe der Maisstoppeln, was zu extremer Reifenabnutzung und vorzeitigem Austausch der Reifen aufgrund tiefer in den Reifen eingebrachter Nuten führt.

Um dieses Problem zu lösen, sind so genannte Stoppelknicker hinter den Reiheneinheiten angeordnet, um die Stängel zu brechen, sie umzuknicken und sie teilweise aus dem Boden zu ziehen, bevor die Reifen des Mähdreschers sie erreichen.

Die US 8 171 707 A offenbart beispielsweise mehrere lange Walzen, die an jedem Ende durch schwenkbar angelenkte Arme am Rahmen des Maispflückers abgestützt sind. Diese Anordnung ist recht groß und schwer.

Die US 2013/0061569 A1 offenbart als anderes Beispiel eine an einer Befestigungskonsole befestige Gleitplatte, wobei die Befestigungskonsole ihrerseits wiederum an einem einzigen, langgestreckten Haltestreifen angebracht ist. Diese Anordnung ist groß, schwer und benötigt einen beträchtlichen Bodenabstand.

Die als gattungsbildend angesehene US 2013/0019581 A1 zeigt einen Stängelknicker für einen Maispflücker, bei dem ein Paddel schwenkbar an einer Konsole angelenkt ist und durch zwei, jeweils an einer anderen Seite der Konsole angebrachte Federn nach unten vorgespannt wird. Die Federn sind um die Drehachse des Paddels aufgewickelt und liegen mit einem Schenkel an der Konsole und dem anderen Schenkel in der Nähe einer Kante des Paddels an. Der hintere Bereich des Paddels ist nach oben gewölbt und sein Schwenkbereich nach unten durch eine Kette begrenzt, anscheinend um Beschädigungen beim Rückwärtsfahren zu vermeiden.

Es besteht somit Bedarf an einem anderen Stoppelknicker, der ein geringeres Gewicht aufweist und weniger Raum einnimmt.

### Erfindung

Ein Stoppelknicker für einen Maispflücker umfasst eine Konsole, die konfiguriert ist, an der Unterseite eines eine Reiheneinheit abstützenden Rahmens eines Maispflückers befestigt zu werden, eine erste Feder, die ein oberes Ende umfasst, welches mit der Konsole gekoppelt ist, wobei die erste Feder auch ein unteres Ende umfasst, das sich von der Konsole nach unten erstreckt, eine zweite Feder, die ein oberes Ende umfasst, welches mit der Konsole gekoppelt ist, wobei die zweite Feder auch ein unteres Ende umfasst, das sich von der Konsole nach unten erstreckt; und ein Paddel, das im Wesentlichen flächig und am unteren Ende der ersten Feder und am unteren Ende der zweiten Feder abgestützt ist.

Das Paddel weist eine erste Kante und eine gegenüberliegende, zweite Kante auf, während das untere Ende der ersten Feder entlang der ersten Kante mit dem Paddel gekoppelt ist und das untere Ende der zweiten Feder entlang der zweiten Kante mit dem Paddel gekoppelt ist.

Bei einer ersten Variante ist das Paddel am unteren Ende der ersten Feder und am unteren Ende der zweiten Feder gleitend abgestützt und eine erste vorspannende Feder ist zwischen dem Paddel und der ersten Feder gekoppelt, um das Paddel gegenüber der ersten Feder nach unten vorzuspannen, und eine zweite vorspannende Feder ist zwischen dem Paddel und der zweiten Feder gekoppelt, um das Paddel gegenüber der zweiten Feder nach unten vorzuspannen.

Bei einer zweiten Variante ist das untere Ende der ersten Feder schwenkbar mit der ersten Kante gekoppelt, um das Paddel um eine sich insbesondere horizontal und quer zur Vorwärtsrichtung erstreckende Schwenkachse gegenüber dem unteren Ende der ersten Feder zu schwenken, während das untere Ende der zweiten Feder schwenkbar mit der zweiten Kante gekoppelt ist, um das Paddel um die Schwenkachse gegenüber dem unteren Ende der zweiten Feder zu schwenken.

Die erste Feder und die zweite Feder können jeweils einen wendelförmigen Abschnitt umfassen.

An der Konsole kann ein Element abgestützt sein, um welches die wendelförmigen Abschnitte gewickelt sind. Das Element kann im Wesentlichen zylindrisch sein und zwei gegenüberliegende Enden aufweisen. Die Enden des Elements können an der Konsole abgestützt sein.

### Ausführungsform

Eine Ausführungsform der Erfindung ist in den Zeichnungen gezeigt, von denen:
Figur 1 eine Draufsicht auf einen Mähdrescher mit einem Maispflücker mit einem Stoppelknicker zeigt,
Figur 2 untere Ansicht des Maispflückers der Figur 1 zeigt,
Figur 3 eine rückwärtige, perspektivische Ansicht einer ersten Ausführungsform eines Stoppelknickers der Figuren 1 und 2 zeigt,
Figur 4 eine frontseitige, perspektivische Ansicht des Stoppelknickers der Figur 3 zeigt,
Figur 5 einen Querschnitt durch den Stoppelknicker der Figuren 3 und 4 entlang der Linie 5-5 der Figur 4 zeigt,
Figur 6 einen Querschnitt des Stoppelknickers der Figuren 3 und 4 entlang der Linie 6-6 der Figur 4 zeigt,
Figur 7 eine rückwärtige, perspektivische Ansicht einer zweiten Ausführungsform eines Stoppelknickers der Figuren 1 und 2 zeigt,
Figur 8 eine frontseitige, perspektivische Ansicht des Stoppelknickers der Figur 7 zeigt,
Figur 9 einen Querschnitt durch den Stoppelknicker der Figuren 7 und 8 entlang der Linie 9-9 der Figur 4 zeigt, und
Figur 10 einen Querschnitt des Stoppelknickers der Figuren 7 und 8 entlang der Linie 10-10 der Figur 4 zeigt.

Die Ausdrücke "vordere", "nach vorn" etc. beziehen sich im Folgenden auf die Vorwärtsrichtung V des Mähdreschers und des Stoppelknickers beim Befahren eines Felds zur Ernte von stängelartigen Pflanzen. Analog beziehen sich die Ausdrücke "hinter", "nach hinten" oder dgl. auf die der Vorwärtsrichtung V entgegen gesetzte Richtung.

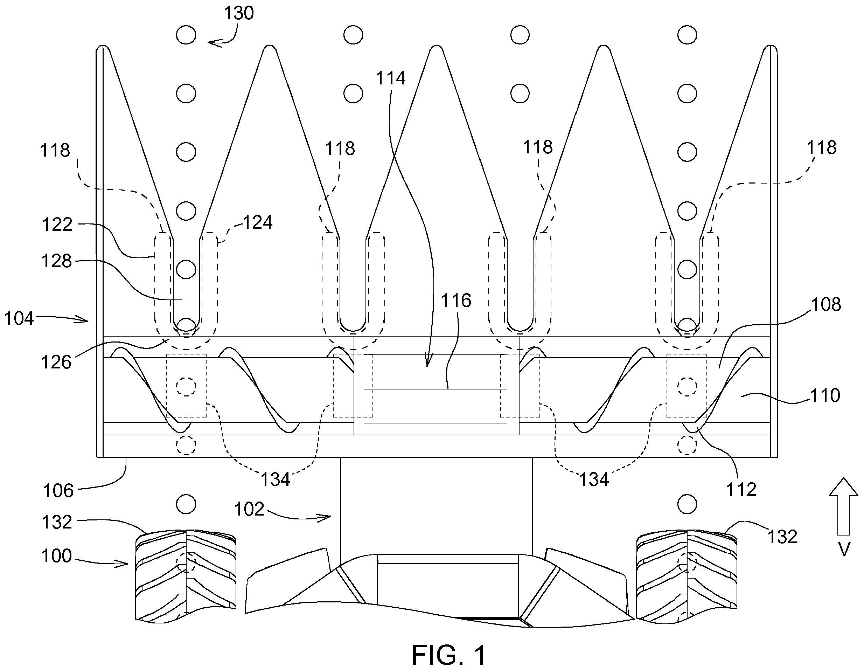

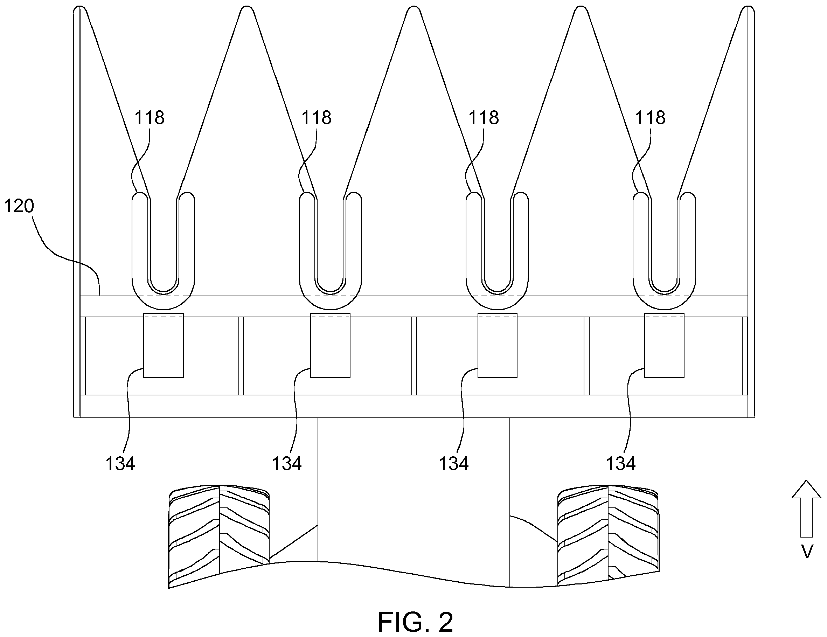

Die Figuren 1 und 2 zeigen einen selbstfahrenden Mähdrescher 100 mit einem Schrägförderer 102, der am vorderen Ende des Mähdreschers 100 angebracht ist und sich von dort nach vorn erstreckt. Am vorderen Ende des Schrägförderers 102 ist auch ein Maispflücker 104 angebracht.

Der Maispflücker 104 umfasst einen Rahmen106, der sich seitlich und im Wesentlichen quer zur Vorwärtsrichtung V erstreckt. Der Rahmen 106 trägt einen Querförderer 108, bei dem es sich hier um einen Schneckenförderer mit einem sich quer erstreckenden Zylinder 110 mit daran befestigten Förderwendeln 112 handelt.

Ein Motor (nicht gezeigt, in der Regel der Verbrennungsmotor des Mähdreschers 100 über einen Antriebsstrang mit einer Querwelle des Maispflückers) ist mit dem Zylinder 110 gekoppelt, um Erntegut zur Mitte des Querförderers 108 zu transportieren. Sich seitlich erstreckende Mitnehmer 116 sind an der mittleren Region des Zylinders 110 angebracht, um das Erntegut nach hinten und in den Schrägförderer 102 zu transportieren. Das Erntegut wird dann im Schrägförderer 102 nach hinten und in den Mähdrescher 100 zum Dreschen, Trennen und Reinigen gefördert.

Der Maispflücker 104 umfasst eine Anzahl an Reiheneinheiten 118, die seitlich nebeneinander angeordnet und an einem Querträger 120 befestigt sind. Der Querträger 120 erstreckt sich seitlich und im Wesentlichen über die gesamte Breite des Maispflückers quer zur Vorwärtsrichtung V.

Typischerweise sind alle Reiheneinheiten 118 untereinander identisch. Jede Reiheneinheit 118 ist in der Form eines ersten, sich nach vorn erstreckenden Armes 122 an der linken Seite der Reiheneinheit 118, und eines zweiten sich nach vorn erstreckenden Armes 124. Die beiden Arme 122, 124 vereinigen sich in einem Getriebegehäuse an der Rückseite der Reiheneinheit 118.

Der erste, sich nach vorn erstreckende Arm 122 und der zweite, sich nach vorn erstreckende Arm 124 definieren eine Lücke 128 zwischen sich, die konfiguriert ist, eine Reihe an stängelartigen, in Reihen angebauten Pflanzen 130 aufzunehmen, wenn sich der Mähdrescher 100 über das Feld bewegt, um die Pflanzen 130 zu ernten. Die Reiheneinheit 118 ist konfiguriert, Maiskolben von den Pflanzenstängeln abzustreifen und den Maisstängel in der Nähe des Bodens abzutrennen.

Wenn die Maisstängel abgetrennt sind, hinterlassen die Reiheneinheiten 118 eine Reihe kurzer Maisstängel, die auch als Stoppeln bezeichnet werden, die sich im Wesentlichen vertikal vom Boden nach oben erstrecken. Die Stoppeln können, auch wenn sie einzeln nicht sehr stark sind, über die Zeit den Reifen 132 des Mähdreschers 100 beträchtliche Schäden zufügen.

Aus diesem Grunde umfasst der Maispflücker 104 auch Stoppelknicker 134, die am Maispflücker 104 und insbesondere am Querträger 120 befestigt sind und sich von dort nach unten erstrecken und die Stoppeln brechen, knicken, anheben oder herausreißen, bevor die Reifen 132 die Stoppeln erreichen.

Auf diese Weise, z.B. durch Brechen, Knicken oder zumindest teilweise Herausreißen der Stoppeln wird die Beschädigung der Reifen beträchtlich vermindert. Außerdem wir durch das Brechen, Knicken oder zumindest teilweise Herausreißen der Stoppeln das Zersetzen der Stoppeln im Boden erleichtert. Dieses Zersetzen bereichert den Boden.

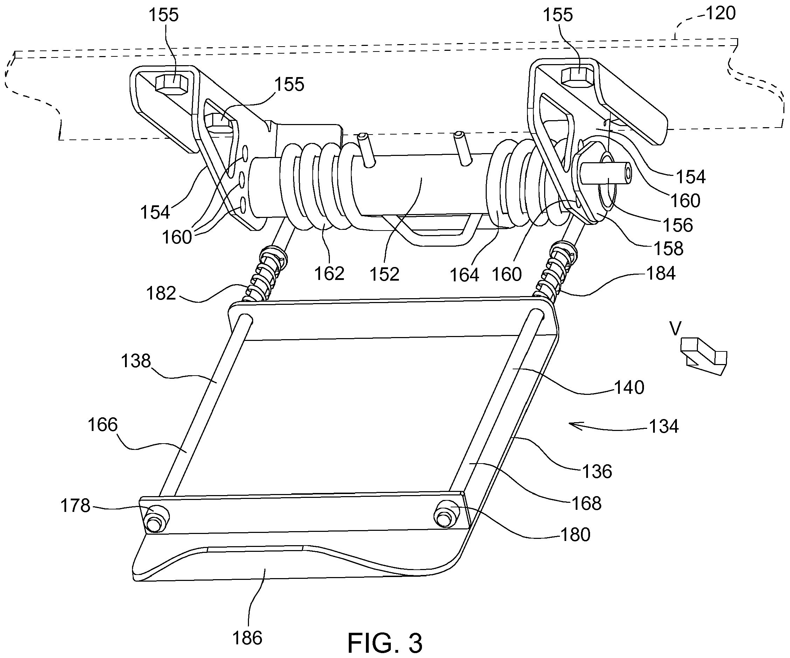

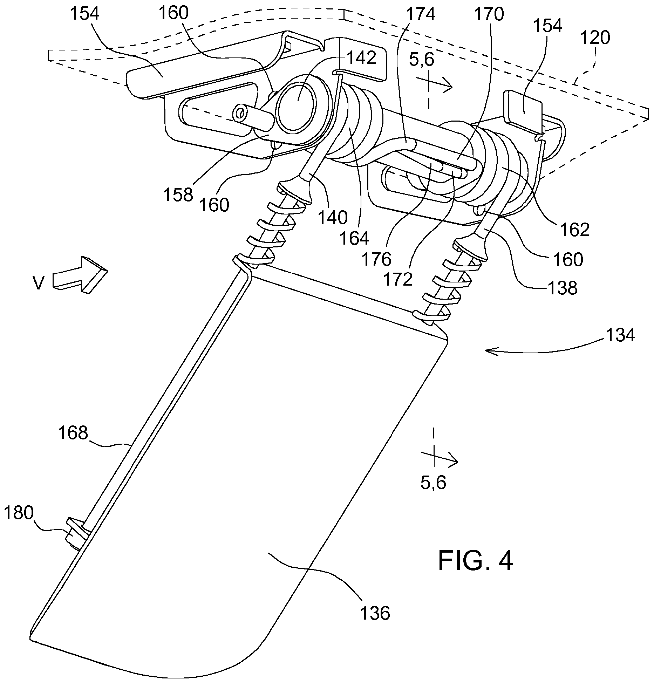

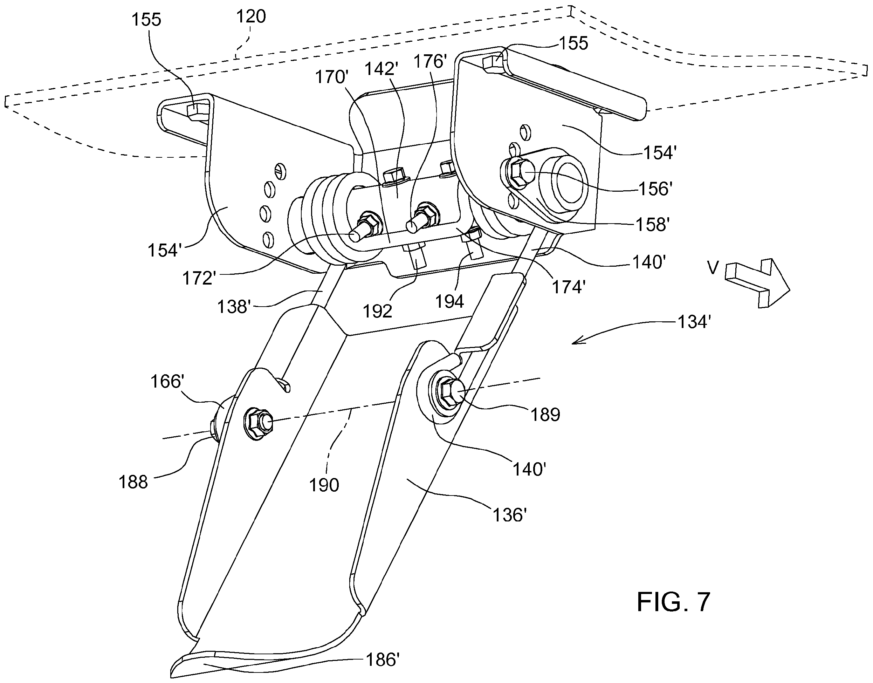

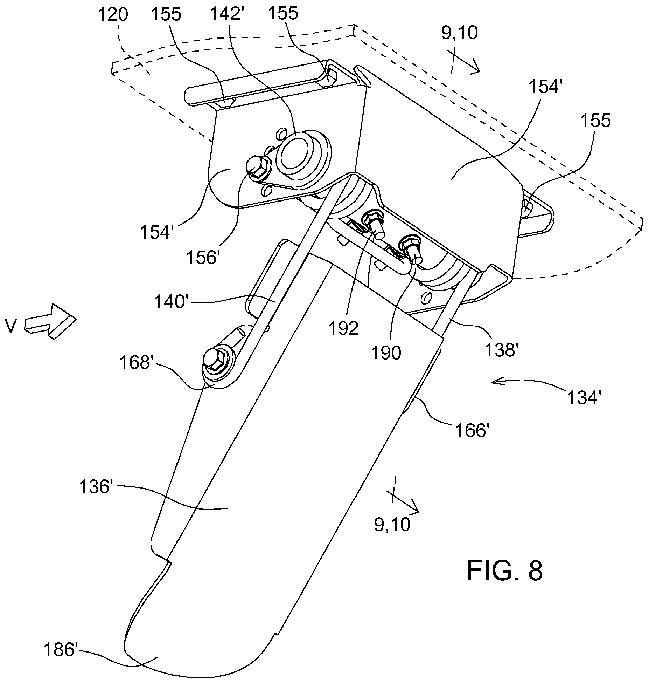

Die Figuren 3 bis 6 zeigen eine erste Ausführungsform des Stoppelknickers 134. Die Figuren 7 bis 10 zeigen eine zweite Ausführungsform des Stoppelknickers 134'.

Es wird nun auf die Figuren 3 bis 6 verwiesen, gemäß denen der Stoppelknicker 134 ein Paddel 136 umfasst, das an einer ersten Feder 138 und einer zweiten Feder 140 abgestützt ist. Das Paddel 136 ist an einem unteren Ende der ersten Feder 138 und der zweiten Feder 140 abgestützt. Das obere Ende der ersten Feder 138 und der zweiten Feder 140 ist auf einem Element 142 abgestützt, welches wiederum an einer Konsole 154 abgestützt ist, die wiederum an einem unteren Abschnitt des Querträgers 120 durch abnehmbare Befestigungselemente 155 fixiert ist

Das Element 142 ist in der Form eines langgestreckten Zylinders, der sich seitlich und im Wesentlichen parallel zum Querträger 120 erstreckt. Das Element 142 ist an seinen beiden äußeren Enden in Öffnungen der Konsole 154 abgestützt. Das Element kann in den Öffnungen um seine Längsachse in eine Vielzahl unterschiedlicher Betriebspositionen geschwenkt werden.

Das Element 142 wird in diesen unterschiedlichen Betriebspositionen durch einen Stift 156 gehalten, der sich von einem Flansch 158 erstreckt. Der Flansch 158 ist z.B. durch Schweißen an einem Ende des Elements 142 befestigt. Die Drehposition des Elements 142 gegenüber der Konsole 154 kann durch Entfernen des Stifts, Drehen des Elements 142 und Wiedereinsetzen des Stifts 156 in ein entsprechendes Loch 160 in der Konsole geändert werden. Mehrere dieser Löcher 160 sind in der Konsole 154 bereitgestellt, um das Element 142 in alternativen Drehpositionen gegenüber der Konsole 154 zu haltern.

Die erste Feder 138 umfasst einen ersten, wendelförmigen Federabschnitt 162 und die zweite Feder 138 umfasst einen zweiten, wendelförmigen Federabschnitt 164. Der erste Federabschnitt 162 und der zweite Federabschnitt 164 sind um das Element 142 herum gewickelt, um auf diese Weise die Federabschnitte 162, 164 am Element 142 zu haltern. Es wird ein hinreichender Abstand zwischen dem ersten Federabschnitt 162 und dem zweiten Federabschnitt 164 bereitgestellt, um es einem unteren Ende 166 der ersten Feder 138 und einem unteren Ende 168 der zweiten Feder zu erlauben, nach unten und oben auszuweichen, wenn der Stoppelknicker 134 über die sich auf dem Feld nach oben erstreckenden Stoppeln gezogen wird.

Die erste Feder 138 hat ein oberes Ende 170, das an einem Anschlag 172 am Element 142 anliegt. Wenn das Element 142 gegenüber der Konsole 154 gedreht wird, ändert sich auch die Position des Anschlags 172. Der Anschlag 172 kontrolliert die Position des oberen Endes 170. Er kontrolliert daher die Vorspannung und nach unten gerichtete Kraft der Feder 138 gegen das Paddel 136 und somit die Vorspannung und nach unten gerichtete Kraft des Paddels 136 gegen den Boden.

Die zweite Feder 140 hat ein oberes Ende 174, das an einem Anschlag 176 am Element 142 anliegt. Wenn das Element 142 gegenüber der Konsole 154 gedreht wird, ändert sich auch die Position des Anschlags 176. Der Anschlag 176 kontrolliert die Position des oberen Endes 174. Er kontrolliert daher die Vorspannung und nach unten gerichtete Kraft der Feder 140 gegen das Paddel 136 und somit die Vorspannung und nach unten gerichtete Kraft des Paddels 136 gegen den Boden.

Bei der hier gezeigten Anordnung sind die oberen Enden 170 und 174 zur Vereinfachung aneinander befestigt. Bei einer anderen Anordnung können die beiden Federn 138, 140 jedoch getrennte, einzelne Komponenten sein.

Das Paddel 136 ist verschiebbar am unteren Ende 166 der ersten Feder 138 und am unteren Ende 168 der zweiten Feder 140 abgestützt. Ein Anschlag 178 ist am unteren Ende 166 befestigt, um das Paddel 136 daran zu hindern, vom unteren Ende der ersten Feder 138 abzurutschen. Ein Anschlag 180 ist am unteren Ende 168 befestigt, um das Paddel 136 daran zu hindern, vom unteren Ende der zweiten Feder 140abzurutschen.

Eine erste vorspannende Feder 182 (gekoppelt mit und zwischen dem Paddel 136 und der ersten Feder 138) ist bereitgestellt, um das Paddel 136 nach unten und in Richtung auf ein unteres Ende des unteren Endes 166 vorzuspannen. Eine zweite vorspannende Feder 184 (gekoppelt mit und zwischen dem Paddel 136 und der zweiten Feder 140) ist bereitgestellt, um das Paddel 136 nach unten und in Richtung auf ein unteres Ende des unteren Endes 168 vorzuspannen.

Sowohl die erste vorspannende Feder 182 als auch die zweite vorspannende Feder 184 erlauben es dem Paddel 136, gegenüber der ersten Feder 138 und der zweiten Feder 140 nach oben zu gleiten. Diese nach oben gerichtete Gleitbewegung vermindert die Möglichkeit einer Beschädigung des Stoppelknickers 134, wenn der Mähdrescher 100 rückwärts fährt.

Wenn der Mähdrescher 100 rückwärts fährt wird der gegen die Unterseite 186 des Paddels wirkende Boden bewirken, dass das Paddel 136 entlang des unteren Endes 166 und des unteren Endes 168 nach oben gleitet. Wenn der Mähdrescher 100 wieder in eine Vorwärtsrichtung fährt, werden die erste vorspannende Feder 182 und die zweite vorspannende Feder 184 das Paddel 136 entlang des unteren Endes 166 und des unteren Endes 168 nach unten drücken. Die Anschläge 178 und 180 werden verhindern, dass das Paddel 136 von den unteren Enden 166 und 168 abrutscht.

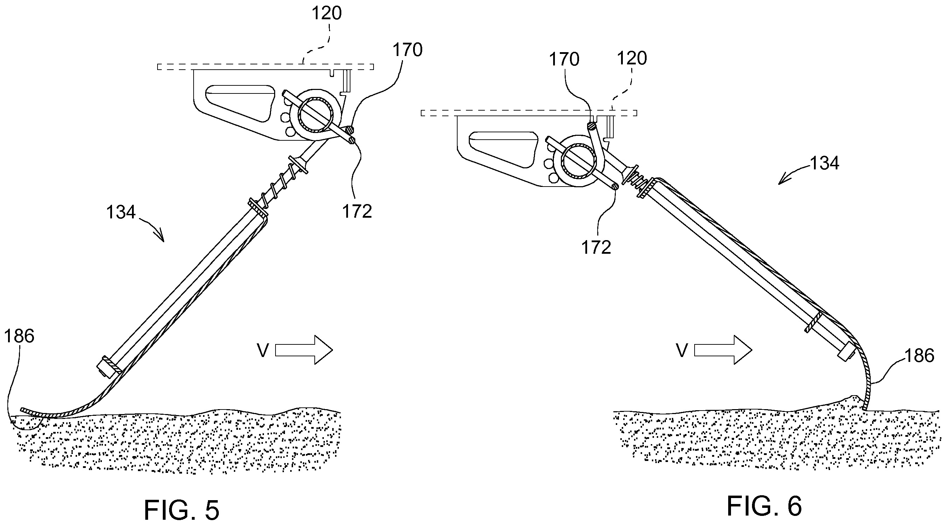

Wenn der Mähdrescher 100 rückwärts fährt, dreht sich das Paddel 136 aus der in Figur 5 gezeigten Position in die in Figur 6 gezeigte Position. Diese reversierte Bewegung des Paddels 136 hebt das obere Ende 170 (und das nicht gezeigte obere Ende 174) vom Anschlag 172 (und dem nicht gezeigten Anschlag 176) ab. Dies ermöglicht es der ersten, wendelförmigen Federabschnitt 162 (und dem nicht gezeigten, jedoch identischen zweiten, wendelförmigen Federabschnitt 164) in der umgekehrten Richtung frei zu drehen und schlaff zu bleiben und nicht in der umgekehrten Richtung gespannt zu werden. Dieses vermindert den Betrag des Eindringens und Grabens der Unterseite 186 des Paddels 136 in den Boden, wenn es in Rückwärtsrichtung gezogen wird (vgl. Figur 6).

In den Figuren 5 und 6 wird der Aufbau und Betrieb der Feder 138 gezeigt. Da der Stoppelknicker 134 zur einer vertikalen Längsebene symmetrisch ist, die durch einen seitlichen Mittelpunkt des Stoppelknickers 134 verläuft, sind der Aufbau und Betrieb der Feder 140 identisch dazu.

Die Figuren 7, 8, 9 und 10 illustrieren eine zweite Ausführungsform eines Stoppelknickers 134', bei welcher das Paddel 136' an einer ersten Feder 138' und einer zweiten Feder 140' abgestützt ist. Auf derselben Weise wie in der Figuren 1 bis 6 ist eine Konsole 154' durch abnehmbare Befestigungselemente 155 am Querträger 120 befestigt und trägt ein Element 142'. Das Element 142' ist auf ähnliche Weise durch Entfernung eines Befestigers 156' (der hier als mit Gewinde versehen gezeigt ist) von einem Flansch 158', drehen des Elements 142' und Wiederanbringen der abnehmbaren Befestiger 156' repositionierbar. Die erste Feder 138' und die zweite Feder 140' haben in ähnlicher Weise einen ersten wendelförmigen Abschnitt 162' bzw. einen zweiten wendelförmigen Abschnitt 164', die um das Element 142' gewickelt sind. Die erste Feder 138' und die zweite Feder 140' haben in ähnlicher Weise obere Enden 170' und 174', die an entsprechenden Anschlägen 172' und 176' anliegen.

Das untere Ende 166' der Feder 138' und das untere Ende 168' der Feder 140' sind als Augen geformt, durch welche sich ein Schwenkstift 188 bzw. ein Schwenkstift 189 erstrecken. Die Schwenkstifte 188 und 189 sind in der Weise mit dem Paddel 136' verbunden, dass das Paddel 136' gegenüber dem unteren Ende 166' und dem unteren Ende 168' um eine Achse 190 schwenken kann, welche durch die Augen an den unteren Enden 166' und 168' definiert ist. Die Achse 190 ist im Wesentlichen horizontal und erstreckt sich parallel zur Längserstreckung des Querträgers 120.

Ein Anschlag 192 und ein Anschlag 194 sind am Element 142' befestigt, um die nach vorn gerichtete Drehbewegung der oberen Enden der Federn 138' bzw. 140' gegenüber dem Querträger 120 zu begrenzen. Auf diese Weise können die oberen Enden der Federn 138' und 140' frei um das Element 142' von einer ersten Position, in der sei an den Anschlägen 172' bzw. 176' anliegen, in eine zweite Position verschwenken, in der sie an den Anschlägen 192 bzw. 194 anliegen, wenn sich die Fahrtrichtung des Mähdreschers 100 von vorwärts auf rückwärts ändert und das untere Ende 186' durch den Boden gegenüber dem Rahmen 106 des Maispflückers 104 nach vorn gezogen wird.

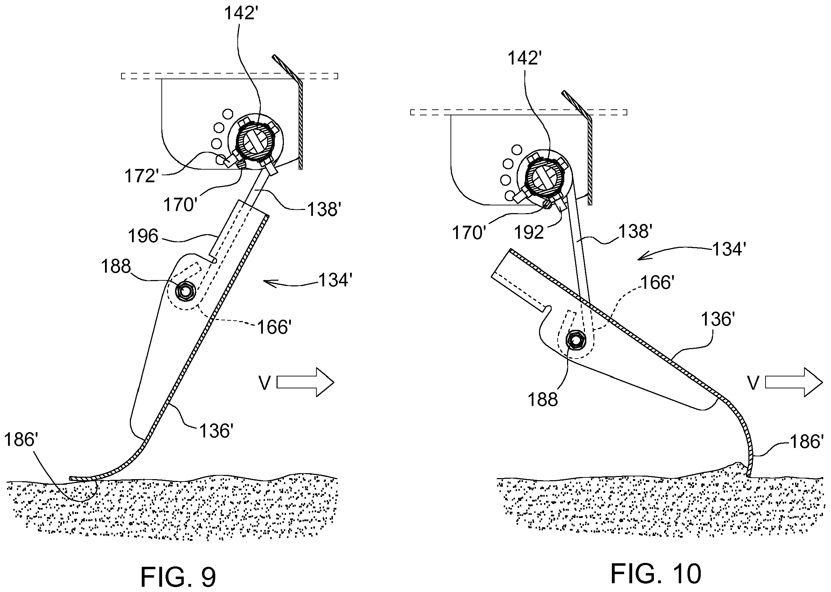

Gleichzeitig (d.h. wenn die Fahrtrichtung umgekehrt wird) ändert sich auch die Position des Paddels 136' gegenüber der Feder 138' und der Feder 140'. Figur 9 stellt die Position des Paddels 136' gegenüber den Federn 138' und 140' dar, wenn der Mähdrescher 100 in seiner Vorwärtsrichtung V fährt und Erntegut aufnimmt. Die Figur 10 zeigt die Position des Paddels 136' gegenüber den Federn 138' und 140' wenn der Mähdrescher 100 rückwärts fährt.

In der Figur 9 ist das Paddel 136' gegenüber der Feder 138' nach hinten geschwenkt worden, bis ein im Paddel 136' geformter Anschlag 196 am unteren Ende der Feder 138' anliegt. Dieses verhindert eine weitere Rückschwenkbewegung des Paddels 136' gegenüber dem unteren Ende der Feder 138'. Jede weitere Rückwärtsbewegung des Paddels 136' führt dazu, dass die Feder 138' nach hinten ausfedert. In dieser Position liegt das obere Ende 170' der Feder 138' am Anschlag 172' an und hindert sie daran, gegenüber dem Element 142' weiter zu rotieren.

In der Figur 10 ist das Paddel 136' gegenüber der Feder 138' um die Schwenkachse 190 nach vorn und vom Anschlag 196 fort verschwenkt. Dieses setzt den Niederdruck der Feder 138' aus und erlaubt es dem unteren Ende 186' des Paddels 136' leicht gegen den Boden zu drücken. Gleichzeitig verschwenkt die Feder 138' nach vorn, bis ihr oberes Ende 170' am Anschlag 192 anliegt, was ein weiteres Verschwenken der Feder 138' in Vorwärtsrichtung gegenüber dem Querträger 142' verhindert.

In den Figuren 9 und 10 wird der Aufbau und Betrieb der Feder 138' gezeigt. Da der Stoppelknicker 134' zur einer vertikalen Längsebene symmetrisch ist, die durch einen seitlichen Mittelpunkt des Stoppelknickers 134' verläuft, sind der Aufbau und Betrieb der Feder 140' identisch dazu.

Die Figuren und Erläuterungen zeigen zwei Ausführungsformen der Erfindung. Es sei noch angemerkt, dass der Stoppelknicker 134 oder 134' nicht nur an einem Maispflücker 104, sondern auch an einem Mähvorsatz für einen Feldhäcksler verwendet werden kann.

## Patentansprüche

1. Stoppelknicker (134, 134') für einen Maispflücker (104), mit:
einer Konsole (154, 154'), die konfiguriert ist, an der Unterseite eines eine Reiheneinheit (118) abstützenden Rahmens (106) eines Maispflückers (104) befestigt zu werden;
einer ersten Feder (138, 138'), die ein oberes Ende umfasst, welches mit der Konsole (154, 154') gekoppelt ist, wobei die erste Feder (138, 138') auch ein unteres Ende (166, 166') umfasst, das sich von der Konsole (154, 154') nach unten erstreckt;
einer zweiten Feder (140, 140'), die ein oberes Ende umfasst, welches mit der Konsole (154, 154') gekoppelt ist, wobei die zweite Feder (140, 140') auch ein unteres Ende (168, 168') umfasst, das sich von der Konsole (154, 154') nach unten erstreckt; und
einem Paddel (136, 136'), das im Wesentlichen flächig und am unteren Ende (166, 166') der ersten Feder (138, 138') und am unteren Ende (168, 168') der zweiten Feder (140, 140') abgestützt ist,
wobei das Paddel (136, 136') eine erste Kante und eine gegenüberliegende, zweite Kante aufweist, und wobei das untere Ende (166, 166') der ersten Feder (138, 138') entlang der ersten Kante mit dem Paddel (136, 136') gekoppelt ist und das untere Ende der zweiten Feder (140, 140') entlang der zweiten Kante mit dem Paddel (136, 136') gekoppelt ist,
**dadurch gekennzeichnet, dass** das Paddel (136, 136') am unteren Ende (166, 166') der ersten Feder (138, 138') und am unteren Ende (168, 168') der zweiten Feder (140, 140') gleitend abgestützt ist und dass eine erste vorspannende Feder (182) zwischen dem Paddel (136) und der ersten Feder (138) gekoppelt ist, um das Paddel (136) gegenüber der ersten Feder (138) nach unten vorzuspannen, und dass eine zweite vorspannende Feder (184) zwischen dem Paddel (136) und der zweiten Feder (140) gekoppelt ist, um das Paddel (136) gegenüber der zweiten Feder (140) nach unten vorzuspannen,
oder dass das untere Ende (166') der ersten Feder (138') schwenkbar mit der ersten Kante gekoppelt ist, um das Paddel (136') um eine sich horizontal und quer zur Vorwärtsrichtung (V) erstreckende Schwenkachse (190) gegenüber dem unteren Ende (166') der ersten Feder (138') zu schwenken, und dass das untere Ende (168') der zweiten Feder (140') schwenkbar mit der zweiten Kante gekoppelt ist, um das Paddel (136') um die Schwenkachse (190) gegenüber dem unteren Ende (168') der zweiten Feder (140') zu schwenken.

2. Stoppelknicker (134, 134') nach Anspruch 1, wobei die erste Feder (138, 138') und die zweite Feder (140, 140') einen wendelförmigen Abschnitt (162, 162', 164, 164') umfassen.

3. Stoppelknicker (134, 134') nach Anspruch 2, mit einem an der Konsole (154, 154') abgestützten Element (142, 142'), um welches die wendelförmigen Abschnitte (162, 162', 164, 164') gewickelt sind.

4. Stoppelknicker (134, 134') nach Anspruch 3, wobei das Element (142, 142') im Wesentlichen zylindrisch ist und zwei gegenüberliegende Enden aufweist.

5. Stoppelknicker (134, 134') nach Anspruch 4, wobei die Enden des Elements (142, 142') an der Konsole (154, 154') abgestützt sind.

6. Maispflücker (104) mit einem Rahmen (106), einer Mehrzahl an am Rahmen (106) befestigten Reiheneinheiten (118) und wenigstens einem am Rahmen (106) befestigten Stoppelknicker (134') nach Anspruch 1.

## Claims

1. Stubble bender (134, 134') for a maize picker (104), with:
a bracket (154, 154') which is configured to be fastened to the underside of a frame (106) of a maize picker (104), the frame supporting a row unit (118);
a first spring (138, 138') which comprises an upper end which is coupled to the bracket (154, 154'), wherein the first spring (138, 138') also comprises a lower end (166, 166') which extends downwards from the bracket (154, 154');
a second spring (140, 140') which comprises an upper end which is coupled to the bracket (154, 154'), wherein the second spring (140, 140') also comprises a lower end (168, 168') which extends downwards from the bracket (154, 154'); and
a paddle (136, 136') which is substantially flat and is supported at the lower end (166, 166') of the first spring (138, 138') and at the lower end (168, 168') of the second spring (140, 140'),
wherein the paddle (136, 136') has a first edge and an opposite second edge, and wherein the lower end (166, 166') of the first spring (138, 138') is coupled along the first edge to the paddle (136, 136'), and the lower end of the second spring (140, 140') is coupled along the second edge to the paddle (136, 136'),
**characterized in that** the paddle (136, 136') is supported in a sliding manner on the lower end (166, 166') of the first spring (138, 138') and on the lower end (168, 168') of the second spring (140, 140'), and **in that** a first prestressing spring (182) is coupled between the paddle (136) and the first spring (138) in order to prestress the paddle (136) downwards in relation to the first spring (138), and **in that** a second prestressing spring (184) is coupled between the paddle (136) and the second spring (140) in order to prestress the paddle (136) downwards in relation to the second spring (140),
or **in that** the lower end (166') of the first spring (138') is coupled pivotably to the first edge in order to pivot the paddle (136') about a pivot axis (190), which extends horizontally and transversely with respect to the forwards direction (V), in relation to the lower end (166') of the first spring (138'), and **in that** the lower end (168') of the second spring (140') is coupled pivotably to the second edge in order to pivot the paddle (136') about the pivot axis (190) in relation to the lower end (168') of the second spring (140').

2. Stubble bender (134, 134') according to Claim 1, wherein the first spring (138, 138') and the second spring (140, 140') comprise a helical portion (162, 162', 164, 164').

3. Stubble bender (134, 134') according to Claim 2, with an element (142, 142') which is supported on the bracket (154, 154') and about which the helical portions (162, 162', 164, 164') are wound.

4. Stubble bender (134, 134') according to Claim 3, wherein the element (142, 142') is substantially cylindrical and has two opposite ends.

5. Stubble bender (134, 134') according to Claim 4, wherein the ends of the element (142, 142') are supported on the bracket (154, 154').

6. Maize picker (104) with a frame (106), a plurality of row units (118) fastened to the frame (106) and at least one stubble bender (134'), which is fastened to the frame (106), according to Claim 1.

## Revendications

1. Plieur de chaume (134, 134') pour un cueilleur de maïs (104), comprenant :
une console (154, 154'), qui est configurée pour être fixée au côté inférieur d'un cadre (106) d'un cueilleur de maïs (104) supportant une unité à rangées (118) ;
un premier ressort (138, 138') qui comprend une extrémité supérieure qui est accouplée à la console (154, 154'), le premier ressort (138, 138') comprenant également une extrémité inférieure (166, 166') qui s'étend vers le bas depuis la console (154, 154') ;
un deuxième ressort (140, 140') qui comprend une extrémité supérieure qui est accouplée à la console (154, 154'), le deuxième ressort (140, 140') comprenant également une extrémité inférieure (168, 168') qui s'étend vers le bas depuis la console (154, 154') ; et
une pale (136, 136') qui est supportée essentiellement à plat et à l'extrémité inférieure (166, 166') du premier ressort (138, 138') et à l'extrémité inférieure (168, 168') du deuxième ressort (140, 140'),
la pale (136, 136') présentant une première arête et une deuxième arête opposée, et l'extrémité inférieure (166, 166') du premier ressort (138, 138') étant accouplée le long de la première arête à la pale (136, 136') et l'extrémité inférieure du deuxième ressort (140, 140') étant accouplée le long de la deuxième arête à la pale (136, 136'), **caractérisé en ce que** la pale (136, 136') est supportée de manière glissante à l'extrémité inférieure (166, 166') du premier ressort (138, 138') et à l'extrémité inférieure (168, 168') du deuxième ressort (140, 140') et **en ce qu'**un premier ressort de précontrainte (182) est accouplé entre la pale (136) et le premier ressort (138), afin de précontraindre vers le bas la pale (136) par rapport au premier ressort (138), et **en ce qu'**un deuxième ressort de précontrainte (184) est accouplé entre la pale (136) et le deuxième ressort (140), afin de précontraindre vers le bas la pale (136) par rapport au deuxième ressort (140),
ou **en ce que** l'extrémité inférieure (166') du premier ressort (138') est accouplée de manière pivotante à la première arête, afin de faire pivoter la pale (136') autour d'un axe de pivotement (190) s'étendant horizontalement et transversalement à la direction d'avance (V) par rapport à l'extrémité inférieure (166') du premier ressort (138'), et **en ce que** l'extrémité inférieure (168') du deuxième ressort (140') est accouplée de manière pivotante à la deuxième arête, afin de faire pivoter la pale (136') autour de l'axe de pivotement (190) par rapport à l'extrémité inférieure (168') du deuxième ressort (140').

2. Plieur de chaume (134, 134') selon la revendication 1, dans lequel le premier ressort (138, 138') et le deuxième ressort (140, 140') comprennent une portion en forme d'hélice (162, 162', 164, 164').

3. Plieur de chaume (134, 134') selon la revendication 2, comprenant un élément (142, 142') supporté sur la console (154, 154'), autour duquel sont enroulées les portions en forme d'hélice (162, 162', 164, 164').

4. Plieur de chaume (134, 134') selon la revendication 3, dans lequel l'élément (142, 142') est essentiellement cylindrique et présente deux extrémités opposées.

5. Plieur de chaume (134, 134') selon la revendication 4, dans lequel les extrémités de l'élément (142, 142') sont supportées sur la console (154, 154').

6. Cueilleur de maïs (104) comprenant un cadre (106), une pluralité d'unités à rangées (118) fixées sur le cadre (106) et au moins un plieur de chaume (134') selon la revendication 1, fixé sur le cadre (106).
